# EUROPEAN PATENT APPLICATION

(11) **EP 2 849 459 A1**
(43) Date of publication of application: **18.03.2015**
(21) Application number: 13788510.9
(22) Date of filing: 30.04.2013
(51) Int. Cl.: H04R 3/12, H04M 9/00, G08B 3/10

(54) **METHOD FOR THE TRANSMISSION OF DATA BETWEEN DEVICES OVER SOUND WAVES**

(30) Priority: 09.05.2012 BR 102012109131
(71) Applicant: NEARBYTES TECNOLOGIA DA INFORMAÇÃO LTDA, Rio de Janeiro, (BR)
(72) Inventor: RAMOS, Marcelo Da Cunha, Rio de Janeiro, RJ, CEP 22241-020 (BR); ROOSSEAU, Vivian, Rio de Janeiro, RJ, CEP 22250-060 (BR); SHORTER, Orlando Mark, Rio de Janeiro, RJ, CEP 22281-036 (BR)
(74) Representative: Cordina, Kevin John
(86) International application number: PCT/BR2013/000138
(87) International publication number: WO 2013/166567

(57) **Abstract**

The present invention relates to a method for communicating data between two devices without the need for an additional hardware or any other type of connectivity. The method comprises encoding digital data into digital sound signal, sending this digital signal to the speakers of the emitting device in order to be reproduced, propagating the sound in the air, capturing the sound by the microphone of the receiving device, transforming said sound in digital sound data, and decoding digital sound data in order to recover the original data as it was previously.

## Description

### FIELD OF THE INVENTION

The present invention relates to a method especially developed for the direct application in transmission involving mobile devices with some computational potential, allowing data transmission between two devices without the need for an additional hardware or any other type of connectivity.

### BACKGROUND OF THE INVENTION

The present invention aims to satisfy the growing need on the market for applications between devices, wherein at least one of them is a mobile device, which can be paired (or matched) in a simple way and thus exchange information that may serve as the basis for more complex functionality. In general, the pairing function should require physical proximity of the devices.

Currently, different hardware or software systems solutions are used for this purpose, such as: communication via Bluetooth, pairing through a temporal event, communication via DTMF (Dual Tone Multi-Frequency), communication via NFC (Near Field Communication) and even communication via sound using high frequencies through modulation method for switching frequency (Frequency Shift Keying or FSK).

Bluetooth technology provides a way to connect and exchange information between devices that have the appropriate hardware and works for short distance communications. However, the process of pairing via Bluetooth is not trivial, as it requires identification steps that make the experience poorly intuitive. Moreover, it is not universal, since some platforms restrict this possibility to devices of the same brand.

With regard to the linkage through a temporal event, one of the solutions currently on the market is called BUMP. In this solution, two mobile devices perform the same action (shaking the device) at the same time. This action would be the key to start a pairing of devices. However, this solution requires Internet connectivity and the use of geographical location (GPS) of the devices for their operation, which obviously limits the possibilities for practical and effective use of BUMP.

Communication via DTMF, widely known as the sounds reproduced by dialing phones, can be used for communication between devices. However, due to the nature of the signal, a communication on a single track is necessary, which reproduces the sound close to the microphone of the second device or, alternatively, the appliances should be placed in an inverted position, thus trying to get a two-way communication.

Communication via NFC is a technology that enables the exchange of data, transactions and small wireless communication between two devices using low power radio frequencies. This is an efficient technology, although it requires that both devices are equipped with the necessary hardware to facilitate communication among themselves.

Finally, the solutions reported with the use of high frequency are based on frequency detection digital algorithms that hinder very much a reliable reading of the information. This happens for several reasons, such as, for instance, the identification of the exact onset of the (carrier) signal, the non-linear response that each device has in relation to the various frequencies used, the Doppler effect caused when there is a movement, even small, in positioning the device(s), probably generating errors when reading the signal and also the computational cost of the detection algorithms.

All the above technologies have at least one of the following drawbacks to their perfect functionality and for their use: need for connectivity, external interferences, low transmission speed, extreme proximity and/or need for a special hardware, computational cost and/or problems concerning frequency detection algorithms.

In the case of connectivity, the device should be connected to the Internet via a private or local network or a mobile. The use of lower frequencies generates the need for a larger signal sample for data encoding and decoding which results in a less efficient transmission.

The extreme proximity is another issue, since it requires that the audio output of a device be paired with the other microphone on the other and vice-versa.

In more specific cases, problems caused by outside interference can be observed, in the case of the sound communication method using DTMF signals (frequencies on the order of 400 Hz and 600 Hz), for example, which undermines the reliability of the signal, besides a certain time is needed to capture the tone, which makes the transmission quite slow. In other cases, used in NFC solutions, for instance, there is a need for special hardware, which is rare in current models and results in higher cost of the devices.

In cases where the proposed solutions are related with the use of high frequencies, the problems are associated with the need of detecting the optimal frequency sample window, since in order to detect the frequency that is being read, the amount of previous samples that are being analyzed must be defined. This becomes a problem with the continuous reading of the sound signal. Moreover, because of the particular feature of the frequency detection algorithms, a small change in captured frequency may generate completely incongruent readings, which compromise in a great extent the decoding of data. In order to bypass these peculiarities, it is necessary to take multiple readings until really achieving a consistent data, and this will cause a higher computational cost for the device.

### OBJECTIVES OF THE INVENTION

The objective of the present invention is effectively to solve the above-mentioned issues of the technology of data communication between mobile devices, so that the need for connectivity to the Internet or networks for communication between devices is eliminated.

A further objective of the present invention is to provide a new communication method between two mobile devices using higher frequencies, so that the signal is less susceptible to interferences.

Another objective of the present invention is to provide a new communication method between two devices, by using higher frequencies, which will allow the codification of signals into smaller sound samples, thereby the transmission speed is increased.

It is another objective of the present invention to provide a communication method between two devices using higher frequencies that, although requiring a certain proximity of the devices, will operate at longer distances than those disclosed in the state of the art, such as up to about 10 to 15 centimeters away from each other, favoring two-way communication.

An additional objective of the present invention consists of providing a communication method between two devices using higher frequencies, so that it may be implemented in any device with computing power, audio output and microphone, thus taking advantage of the great variety of appliances currently existing on the market.

### BRIEF DESCRIPTION OF THE FIGURES

The method for data communication between devices using sound waves according to the present invention may be better understood with the aid of the accompanying figures, which should not be considered as limiting the scope of the present invention, since they represent merely examples:
- Figure 1 shows a general scheme of data transmission between two devices according to the method of the present invention.
- Figure 2 shows a reference signal sample with a base frequency F used for encoding and decoding data.
- Figure 3 shows a sound sample generated by the codification of the data to be transmitted.
- Figure 4 shows the result of the superposition of the captured sound with the reference signal, this allowing the reading of the transmitted data.
- Figure 5 is a diagram showing the encoding process of one data to be transmitted as a sound signal.
- Figure 6 is a diagram showing the decoding process of a sound captured by the microphone of the receiving device.

### DETAILED DESCRIPTION OF THE INVENTION

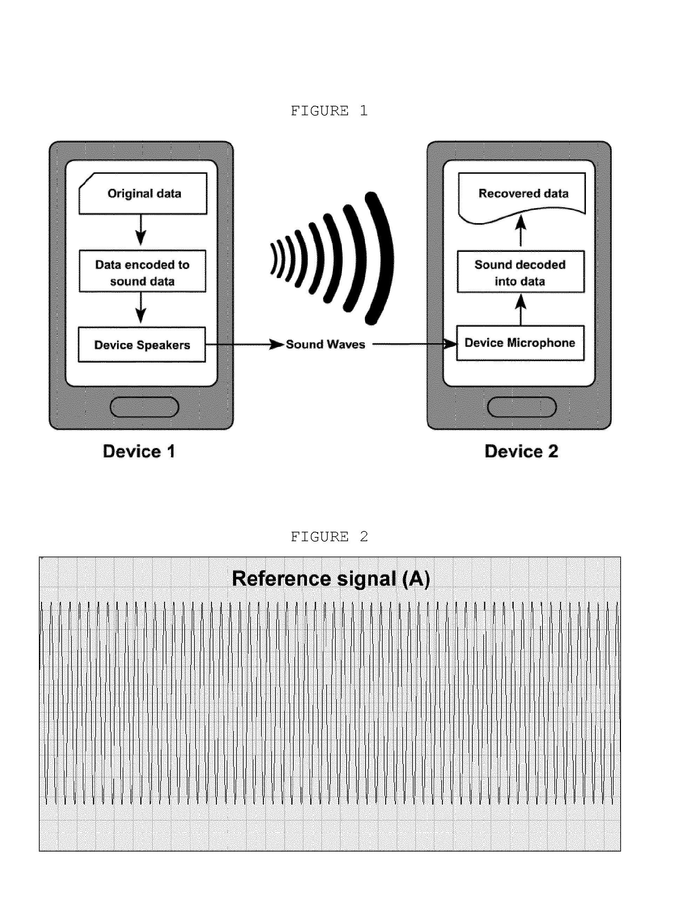

As schematically illustrated in Figure 1, the method for the transmission of data between two devices according to the present invention comprises the following steps:
(i) encoding a digital data into digital sound signal,
(ii) sending said digital signal to the speakers of the emitting device in order to reproduce it,
(iii) propagating the sound in the air,
(iv) capturing the sound by the microphone of the receiving device,
(v) transforming said sound into digital sound data, and
(vi) decoding the digital sound data for recovering the original data as it was previously.

Figure 2 illustrates a sine wave oscillating in a reference frequency F. This wave will be used as the basis for information encoding. All the frequencies lower than the F value will be filtered in sound capture through a high pass range filter (high pass).

According to the present invention, the preferred sound frequency would be contained in the spectrum in the range from 8 KHz to 22 KHz. Sound frequency values lower than 8 KHz may, however, be used, although the external interference will increase and the transmission speed will necessarily decrease. Sound frequency values above 22 KHz may be used when, on the consumer's market, there is availability of devices with higher capacity to use even higher frequencies.

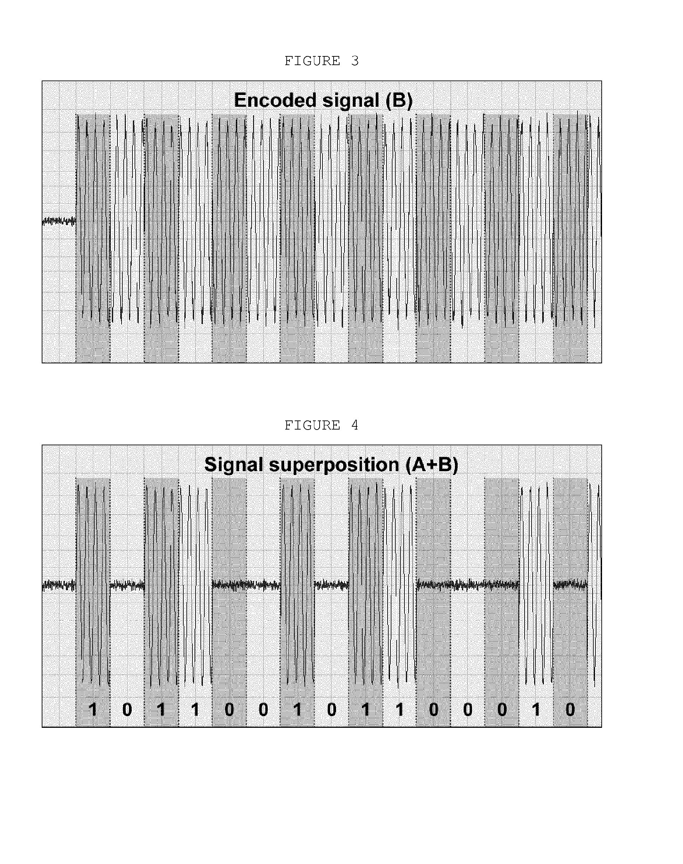

The method used for encoding and decoding data works with this reference wave. Time windows correspond to sequenced bits of data to be transmitted. Binary coding of zeros and ones is carried out using a phase inversion on the original wave. A zero bit corresponds to a phase of zero degree, one bit corresponds to a phase of one hundred and eighty degrees. This phase inversion in the transmitted wave will allow a very simple decoding of the captured sound. Figure 3 illustrates an encoded data with the respective phase inversions. Each color change indicates a time window corresponding to one bit of information.

Figure 4 illustrates how the captured sound (Figure 3) coupled with the reference signal (Figure 2) naturally represents the encoded bits. Phase inversions of the encoded sound are visibly clear where the final wave is zero or reinforced. This encoding and decoding method allows data reading without the need for complex frequency analysis algorithms that, besides having high computational costs, present limitations with respect to the accuracy of the generated frequency and the amount of time needed for a correct identification of the data. In the method of the present invention, a superposition of waves allows reading the data with good clarity. With a few exceptions, high frequency noises possess a low power in ambient sounds, herein a simple high pass range filter (high pass) leaves the captured signal clean enough to be overlapped.

Binary signals may contain both the digital data to be transmitted and bits for controlling and checking errors.

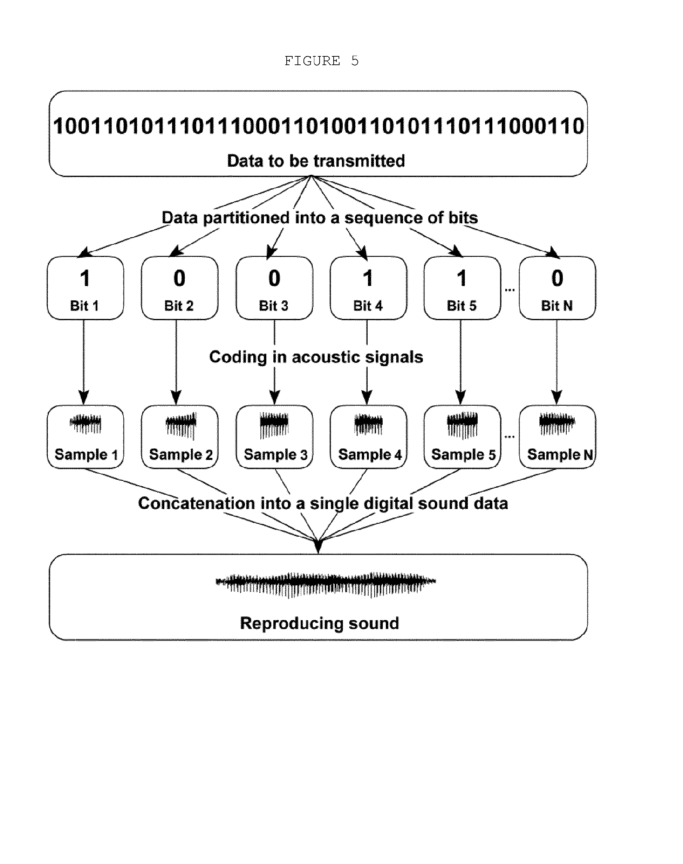

In the encoding process of a data to be transmitted in an acoustic signal according to the present invention, the original data is partitioned in sequences of bits. Each sequence is encoded into acoustic signals using the previously described method. Therefore, the small acoustic signals are concatenated into a single digital sound data and reproduced in the speaker of the device, as illustrated in Figure 5. As previously mentioned, bits for checking errors may be added in each sequence and/or to the data to be transmitted to ensure the reliability of the transmission process.

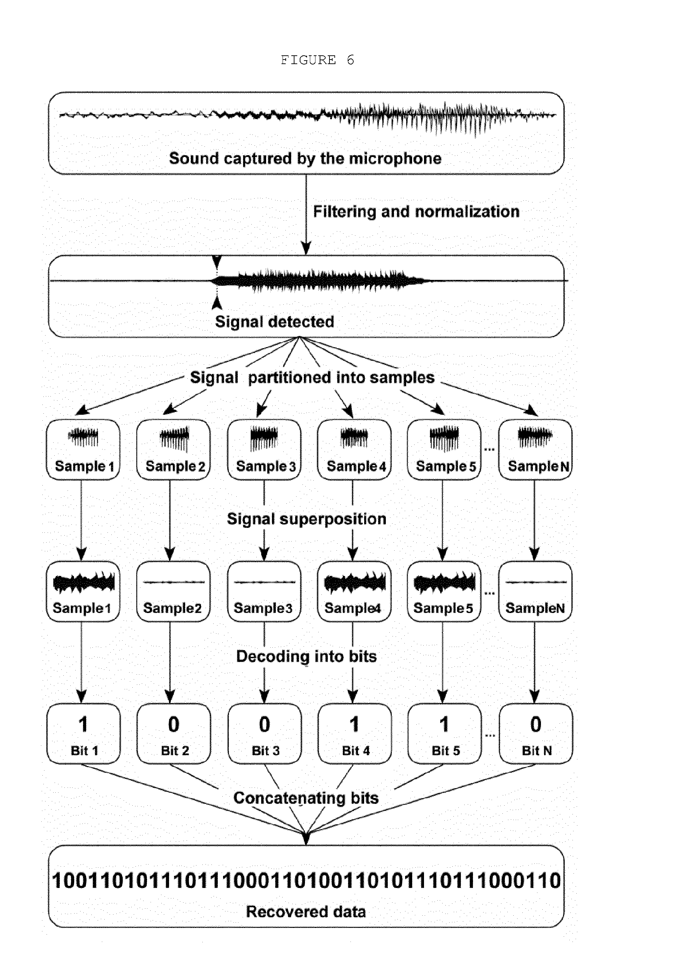

In the decoding process of a sound captured by the microphone of the receiving device, the device digitalizes the captured environment sound and, through constant analyses of samples, an onset of the data signal is detected. Thus, samples are partitioned for wave superposition and they are encoded into sequences of bits, by means of one of the methods disclosed hereinabove. These sequences of bits are then concatenated so that the transmitted data may be recovered. The process is shown in Figure 6.

### EXAMPLES OF APPLICATION

### Payment systems for mobile device

One of the preferred application of the present invention is its use in payment system for mobile devices, thus allowing that most of the mobile devices (smartphones, tablets and similar) available in the market can work as a sale point (SP) and as payment devices using a simple charging and payment mechanics. Using the method of data transmission between two devices according to the present invention, the design of a payment method of very simple mechanics becomes possible. In the application of the sale device (SD) the value to be received is recorded. The paying device P and its application is placed closer to the SP and by means of a specific protocol of the application, the devices communicate by sound, exchanging the needed information to execute the transaction. Just the payer's consent is needed for the transaction to be completed.

### Mobiles pairing for information sharing

One of the most direct functionalities of the present invention is the pairing of devices, in order to enable two physical close devices to share data in a simple and intuitive way. Through the method of data transmission between two devices according to the present invention two devices A and B can be easily paired, as long as the device A and the device B works with the same application and are physically close. By means of a specific pairing protocol of the application, A and B will be able to recognize each other and establish a link for information exchange. From this point, both sender and recipient would already be identified for receiving and sending data.

### Electronic locks

A further simple and direct application of the present invention consists in opening locks. That is, allowing the opening of locks by the use of mobile devices. Through the method for the transmission of data between two devices according to the present invention, a LF device may be connected to a release mechanism of doors and safes. Referred DF device connected to the lock will be constantly listening to the ambient sound and will possess a database of disposable "keys" (data sequences). An opening DL device will possess also a database of "keys" to be reproduced. When reproducing one of the "key sounds", the DF locking device will recognize the validity thereof and will open the door. The used "key sound" becomes automatically invalid following the opening and will be rejected from both databases.

### Personal information exchange

An example of additional application consists of personal contact information exchange, for instance, business cards. Putting into operation the method of data transmission between two devices according to the present invention it is possible to transmit in a simple way, without the need for any other type of connectivity, personal data, such as, name, company, address, telephone, e-mail, etc. It is only required that both users have mobile devices having the application of information exchange according to the present invention and that they put their devices close. The personal information of each user would be transmitted by sound and duly recorded in an internal database of each device for future use.

## Claims

1. METHOD FOR THE TRANSMISSION OF DATA BETWEEN DEVICES OVER ACOUSTIC WAVES, **CHARACTERIZED by** comprising the following steps:
encoding the digital data into digital sound signal,
reproducing the digital signal in the speaker of the device 1,
propagating the sound in the medium (air),
capturing the digital sound signal by the microphone of the device 2,
transforming said signal in digital sound data
and
decoding the digital sound data into the original data.

2. METHOD according to claim 1, **CHARACTERIZED in that** acoustic waves are transmitted at high frequencies.

3. METHOD according to claim 1 or 2, **CHARACTERIZED in that** the high frequencies make the signal less susceptible to external interferences.

4. METHOD according to any one of claims 1 to 3, **CHARACTERIZED in that** the high frequencies allow encoding signals into smaller sound samples, thus increasing the transmission speed.

5. METHOD according to any one of claims 1 to 4, **CHARACTERIZED in that** the high sound frequencies are comprised in the spectrum ranging from 8 KHz to 22 KHz.

6. METHOD according to any one of claims 1 to 4, **CHARACTERIZED in that** the high sound frequencies are lower, but preferably close to 8KHz.

7. METHOD according to any one of claims 1 to 4, **CHARACTERIZED in that** the high sound frequencies are above 22 KHz, provided that there is a device with a greater capacity to operate said high frequencies.

8. METHOD according to claim 1, **CHARACTERIZED in that** it is used by any device presenting computing power, sound output and microphone.

9. METHOD according to claim 1, **CHARACTERIZED in that** it requires a maximum distance from 10 to 15 centimeters between the devices.

10. METHOD according to claim 1, **CHARACTERIZED in that** it comprises digital data encoding/decoding using a reference signal with a defined frequency (F) and its reproduction with phase inversions to represent binary signals which may be reconstructed after being transmitted as digital data.

11. METHOD according to any one of claims 1 to 10, **CHARACTERIZED in that** the encoding process of a data to be transmitted as an acoustic signal comprises the steps of:
(i) dividing the original data in smaller sequences of bits,
(ii) encoding the sequences into acoustic signals using one of the methods of claims 7 or 8,
(iii) concatenating the small acoustic signals in a single digital sound data, and
(iv) subsequently reproducing it in the speaker of the device.

12. METHOD according to any one of claims 1 to 10, **CHARACTERIZED in that** the decoding process of a sound captured by the microphone of the receiving device comprises the steps of:
(i) digitalization the environment sound captured by the device,
(ii) detecting the onset of the data signal through sample analyses,
(iii) distributing the samples for frequency analyses,
(iv) using one of the methods of claim 7 or 8 for encoding sequences of bits, and
(v) subsequently concatenating the sequences and recovering the transmitted data.

13. METHOD according to claim 1, **CHARACTERIZED in that** it is used in payment systems via mobile devices, electronic lock or personal information exchange.
